# EUROPÄISCHE PATENTSCHRIFT

(11) **EP 0 802 337 B1**
(45) Veröffentlichungstag und Bekanntmachung des Hinweises auf die Patenterteilung: **19.09.2001**
(21) Anmeldenummer: 97102558.0
(22) Anmeldetag: 18.02.1997
(51) Int. Cl.: F16C 29/06

(54) **Linearwälzlager**
Linear rolling bearing
Palier linéaire à roulement

(30) Priorität: 20.04.1996 DE 19615722; 23.10.1996 DE 19643737
(43) Veröffentlichungstag der Anmeldung: 22.10.1997
(73) Patentinhaber: INA Wälzlager Schaeffler oHG, 91072 Herzogenaurach (DE)
(72) Erfinder: Greiner, Heinz, 73061 Ebersbach (DE); Winkler, Thomas, 66280 Sulzbach (DE); Welsch, Annette, 66424 Homburg (DE); Friedrich, Horst, 66909 Herschweiler-Pettersheim (DE); Scheib, Frank, 66540 Neunkirchen (DE)

(56) Entgegenhaltungen:
- EP-A- 0 120 093
- EP-A- 0 164 540
- EP-A- 0 608 832
- EP-A- 0 643 233
- DE-A- 4 311 515
- DE-A- 4 331 014
- DE-U- 29 600 917
- GB-A- 2 175 654

## Beschreibung

### Gebiet der Erfindung

Die Erfindung betrifft ein Linearwälzlager mit einer festen Führungsschiene und einem diese U-förmig umgreifenden Tragkörper, welcher sich über Wälzkörper an der Führungsschiene abstützt und längs dieser verfahrbar ist, wobei die Wälzkörper zu beiden Seiten der Führungsschiene an dem Tragkörper in paarweise angeordneten Reihen endlos umlaufend angeordnet und dort mit Haltestegen gehalten sind, sich an Laufbahnen der Führungsschiene und des Tragkörpers abwälzen, an den in Fahrtrichtung weisenden Stirnseiten des Tragkörpers umgelenkt werden und durch Rücklaufbohrungen des Tragkörpers hindurch zurücklaufen, wobei an den Stirnseiten des Tragkörpers Umlenkteile angeordnet sind, die angeformte, in den Bereich der Laufbahnen hineinragende Stege aufweisen.

### Hintergrund der Erfindung

Bei Linearwälzlagern kann eine Verlagerung eines Umlenkteils Erhöhungen des Verschiebewiderstandes und der Verschiebekraftpulsation zur Folge haben oder sogar zum Bruch der Wälzkörperumlenkung führen. Die Ursachen für dieses Problem liegen darin, daß äußere Schläge auf das Lagersystem direkt auf die Wälzkörperumlenkung weitergeleitet werden und daß ein toleranzbedingter Versatz der verschiedenen Wälzkörperlaufbahnen zur Sollposition auftritt.

Aus der DE-OS 35 27 886 ist ein Linearwälzlager der eingangs genannten Art bekannt, bei welchem die beiden Umlenkteile jeweils einstückig ausgeführt sind. Jedes Umlenkteil weist zwei abstehende, in dem Tragkörper verlaufende Haltestege auf, die mit ihren freien Ende aneinander angrenzen und durch einen gemeinsamen Einsteckstift miteinander verbunden sind. Dadurch, daß jedes Umlenkteil eine einstückige Form hat, kann hier weder ein toleranzbedingter noch ein stoßbedingter Versatz der Wälzkörperumlenkung vermieden werden.

Bei einer Wälzkörper-Rückhaltung durch Haltestege, die als profilierte Kunststoffstege ausgeführt und direkt an der Umlenkung angespritzt sein können und sich jeweils auf der Hälfte des Tragkörpers erstrecken, ergibt sich ein langer Entformungsweg der Umlenkschale, so daß diese sehr teuer wird. Außerdem benötigt man hier für jede Tragkörperlänge ein zugehöriges Werkzeug zur Herstellung der Umlenkschale.

### Zusammenfassung der Erfindung

Der Erfindung liegt die Aufgabe zugrunde, die Funktion des Linearwälzlagers zu verbessern und dieses unempfindlicher gegenüber äußeren stoßartigen Belastungen zu machen. Dabei soll nach Möglichkeit auch eine Bauraumeinsparung erfolgen. Bei der Herstellung des Linearwälzlagers soll die Verwendung mehrerer teuerer Spritzwerkzeuge vermieden werden. Fertigungstechnisch bedingte Schwankungen der Tragkörperlänge sollen ausgeglichen werden. Dabei sollen die Haltestege und mit diesen der gesamte Tragkörper bei geringem erforderlichen Bauraum eine hohe Steifigkeit erhalten.

Diese Aufgabe wird erfindungsgemäß dadurch gelöst, daß jedes Umlenkteil von einem Gehäuse und zwei darin mit Spiel eingesetzten Umlenkschalen gebildet ist, an welchen die in die Tragbereiche der Wälzkörper hineinragenden Stege als Zentrierstege ausgebildet sind, und daß jede Umlenkschale zusätzlich einen abstehenden Zentrierbund aufweist, der in eine Rücklaufbohrung des Tragkörpers hineinragt. Infolge des Spiels zwischen den Umlenkschalen und deren Gehäusen ist das Lager unempfindlich gegenüber äußeren Stößen. Dadurch, daß die Umlenkschalen jeweils mit ihrem Zentrierbund in die Rücklaufbohrung des Tragkörpers und gleichzeitig mit ihrem Zentriersteg in den Laufbahnbereich greift, ergibt sich ein exakter Sitz der Umlenkung hinsichtlich der Laufbahnen und der Rücklaufbohrungen. Infolge dieser Anordnung sind nur noch horizontale Abweichungen in geringem Maße möglich.

Die beiden Wälzkörperumlenkungen für jede Längsseite der Führungsschiene und den benachbarten Abrollbereich des Tragkörpers sind voneinander unabhängig. Dadurch besteht eine Toleranzabhängigkeit jeweils nur bei den übereinander angeordneten Wälzkörperumläufen einer Seite. Diese ist infolge der möglichen geringen Abstände der Umläufe voneinander weniger kritisch. Der vertikale Abstand der Wälzkörperreihen voneinander kann minimal gehalten werden.

Die Umlenkschale kann jeweils geteilt ausgeführt sein, wobei ein als äußere Umlenkschale bezeichneter Teil den Zentriersteg und eine Zentrierbundhälfte aufweist, während an einem als innere Umlenkschale bezeichneten Teil die andere Zentrierbundhälfte ausgebildet ist.

Der Haltesteg kann jeweils zwischen zwei einander zugewandten fluchtenden Zentrierstegen der beiden Umlenkteile angeordnet und in deren stirnseitigen Ausnehmungen mit Steckzapfen passend eingesteckt sein.

Der Haltesteg kann auch jeweils als dünner metallischer Blechstreifen ausgebildet sein. Ein solcher Haltesteg kann auf seiner gesamten Steglänge einen konstanten Querschnitt aufweisen, so daß der Blechstreifen durch einfaches Ablängen für jede beliebige Tragkörperlänge geeignet gemacht werden kann. Die Verbindung des Blechstreifens mit den Umlenkschalen kann über ein Stecksystem erfolgen. In den Haltesteg kann eine in Längsrichtung sich erstreckende Sicke eingearbeitet sein. Auf diese Weise läßt sich seine Steifigkeit wesentlich erhöhen.

Mit einer solchen Ausführung sind folgende Vorteile erzielbar: Durch die Verwendung eines dünnen, eventuell profilierten metallischen Blechstreifens ergibt sich auf kleinem Bauraum eine sehr steife Vorrichtung für die Wälzkörper-Rückhaltung. Dabei sind die Umlenkschalen von dem Rückhaltebereich getrennt. Der Haltesteg ist von Längentoleranzen des Tragkörpers unabhängig, da er im Stecksystem mit Spiel angeordnet ist. Auf diese Weise kann eine Verspannung, welche die Funktion eines Haltesteges beeinträchtigen könnte, nicht auftreten.

Die Verbindungsstellen des Haltesteges mit den beiden Umlenkschalen liegen bei der Montage des Tragkörpers an der Führungsschiene in einem solchen Bereich, daß ein stoßfreier Übergang der Wälzkörper von der Lastzone in die Umlenkzone gewährleistet ist. Für verschiedene Tragkörperlängen wird nur ein Werkzeug für die Umlenkschalen und ein Profilierwerkzeug für den metallischen Haltesteg benötigt, da verschiedene Tragkörperlängen jeweils durch ein passendes Ablängen des Haltesteges ermöglicht werden.

### Kurze Beschreibung der Zeichnungen

Ausführungsbeispiele der Erfindung sind in den Zeichnungen dargestellt und werden im folgenden näher beschrieben. Es zeigen:
- Figur 1: einen an einer Führungsschiene angeordneten Tragkörper eines Linearwälzlagers, teilweise in stirnseitiger Ansicht und teilweise im Querschnitt;
- Figur 2: eine Innenansicht eines Umlenkteils;
- Figur 3: eine explosionsartige Darstellung der Einzelteile des Umlenkteils im Längsschnitt bzw. in der Seitenansicht;
- Figur 4: das zusammengesetzte Umlenkteil im Längsschnitt;
- Figur 5: eine explosionsartige Darstellung der Einzelteile des Umlenkteils in der Innenansicht;
- Figur 6: eine perspektivische Darstellung einer äußeren Umlenkschale;
- Figur 7: eine abgewandelte Umlenkschale im waagerechten Schnitt;
- Figur 8: eine abgewandelte Umlenkschale, die an einem Tragkörper montiert ist, im waagerechten Schnitt;
- Figur 9: eine perspektivische Darstellung eines Haltesteges, der zwischen zwei äußeren, mit Zentrierstegen versehenen Umlenkschalen angeordnet ist, wobei jedoch zugehörige Zentrierbundhälften nicht dargestellt sind;
- Figur 10: einen Querschnitt durch den Tragkörper eines Linearlagers, und zwar durch den Steckbereich des Zentriersteges einer äußeren Umlenkschale für den Wälzkörper-Haltesteg.

### Ausführliche Beschreibung der Zeichnungen

Ein erfindungsgemäßes Linearlager weist eine Führungsschiene 1 auf, welche von einem im Querschnitt U-förmigen Tragkörper 2 teilweise umfaßt wird. An den beiden Längsseiten der Führungsschiene 1 sind Laufbahnen 3 für Wälzkörper 4 ausgebildet. Die Wälzkörper sind hier Kugeln. Über sie stützt sich der Tragkörper 2 an der Führungsschiene 1 ab. Der Tragkörper 2 hat daher ebenfalls Laufbahnen 5 für die Wälzkörper 4. An jeder Längsseite der Führungsschiene 1 sind die Wälzkörper 4 in zwei übereinander befindlichen endlosen Umläufen angeordnet. Jeder Umlauf besteht aus einem tragenden Bereich, einen rücklaufenden Bereich und zwei diese Bereiche miteinander verbindenden Umlenkbereichen für die Wälzkörper 4.

Die tragenden Bereiche befinden sich an den Laufbahnen 3 der Führungsschiene und an den Laufbahnen 5 des Tragkörpers 2. Die rücklaufenden Bereiche werden jeweils von einer Rücklaufbohrung 6 des Tragkörpers 2 gebildet. Für die Umlenkbereiche sind an dem Tragkörper an den beiden in bzw. entgegen der Fahrtrichtung weisenden Stirnseiten Umlenkteile 7 angebracht. Zwischen den Wälzkörpern 4 des unteren Umlaufs und den Wälzkörpern 4 des oberen Umlaufes befindet sich im Bereich der Führungsschiene 1 jeweils ein Haltesteg 8, welcher dafür sorgt, daß die Wälzkörper 4 nicht aus dem Tragkörper 2 herausfallen, wenn dieser von der Führungsschiene 1 abgezogen wird. Denn bei Trennung des Tragkörpers 2 von der Führungsschiene 1 müssen die Wälzkörper 4 am Tragkörper 2 gehalten werden, so daß ein Verlust von Wälzkörpern 4 während des Transport des Tragkörpers 2 gesondert von der Führungsschiene 1 oder bei der Montage des Tragkörpers 2 an der Führungsschiene 1 verhindert wird.

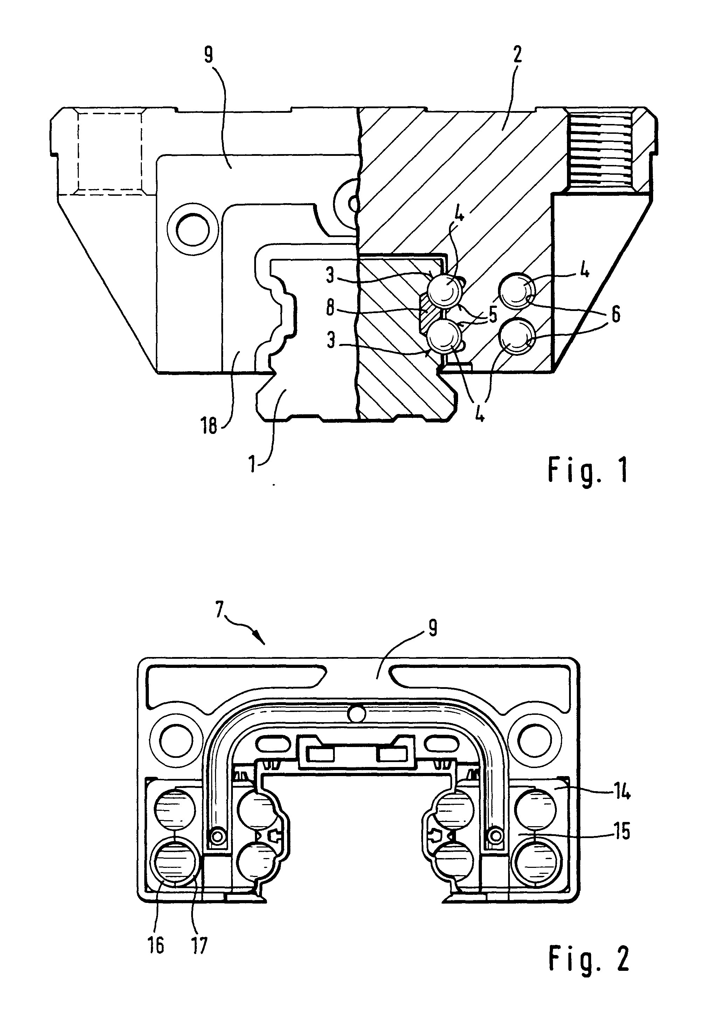

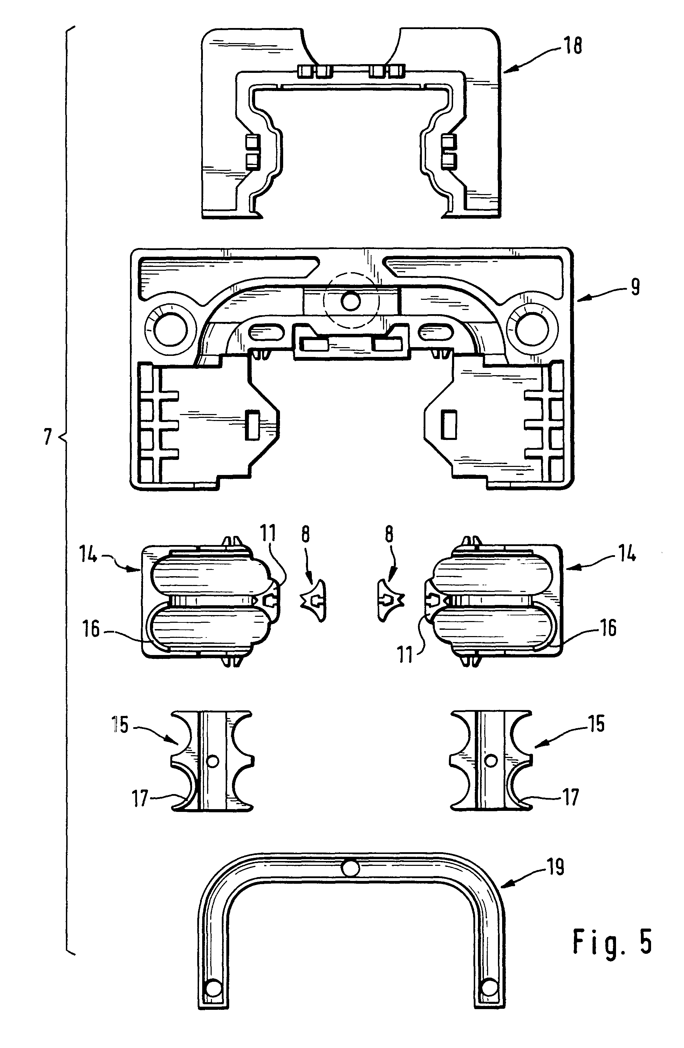

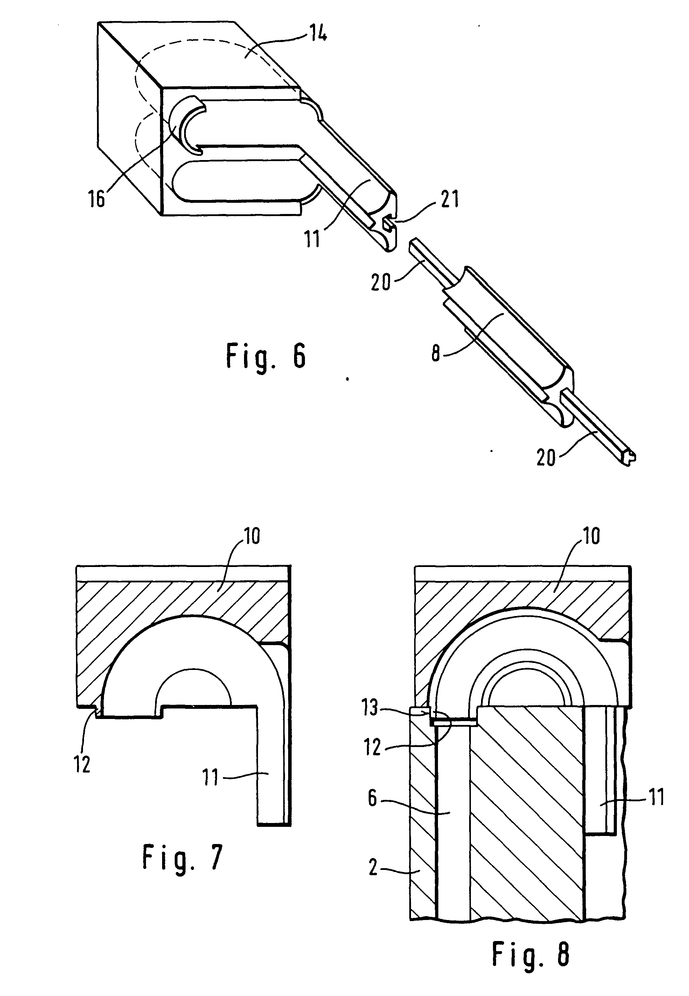

Jedes Umlenkteil 7 besteht aus einem Gehäuse 9 zur Aufnahme von Umlenkschalen. Diese können entweder, wie in den Figuren 7 und 8 gezeigt, einstückig oder, wie in den Figuren 2 bis 6 gezeigt, zweiteilig ausgeführt sein. Die Umlenkschale 10 gemäß Figur 7 hat einen abstehenden, in den Tragkörper 2 hineinragenden Zentriersteg 11 und außerdem einen abstehenden, kreisringförmigen, zum Tragkörper 2 weisenden Zentrierbund 12, der in der Rücklaufbohrung 6 des Tragkörpers 2 eingesteckt ist. Zum Zweck der Zentrierung weist die Rücklaufbohrung 6 an ihren Enden jeweils eine Senkung 13 auf.

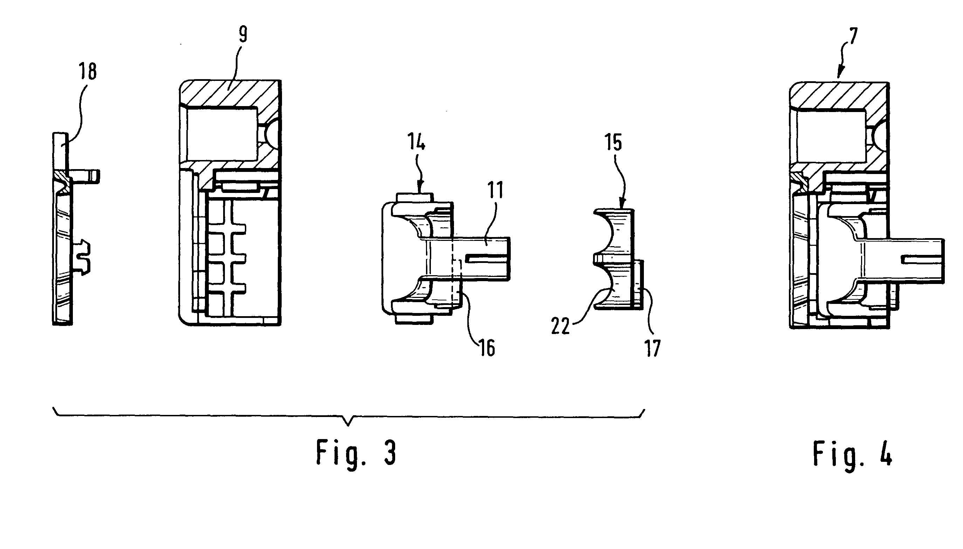

Aus Figur 3 erkennt man, daß in diesem Ausführungsbeispiel die Umlenkschale in eine äußere Umlenkschale 14 und eine innere Umlenkschale 15 aufgeteilt ist. Die äußere Umlenkschale enthält den abstehenden Zentriersteg 11 und eine Zentrierbundhälfte 16, während die andere Zentrierbundhälfte 17 an der inneren Umlenkschale 15 ausgebildet ist. Im zusammengesetzten Zustand, wenn die äußere Umlenkschale 14 und die innere Umlenkschale 15 in dem Gehäuse 9 eingesetzt sind, bilden die Zentrierbundhälfte 16 und die Zentrierbundhälfte 17 zusammen den vollständigen ringförmigen Zentrierbund. Im Umlenkbereich weist die innere Umlenkschale 15 eine Profilierung 22 auf, die komplementär zu der äußeren Umlenkschale 14 ausgebildet ist.

An dem Umlenkteil 7 befindet sich außerdem ein Frontabstreifer 18, welcher an der äußeren Stirnseite in das Gehäuse 9 eingesteckt ist. Innerhalb des Gehäuses 9 ist schließlich noch ein Schmierkanaleinsatz 19 angeordnet. Der Haltesteg 8 befindet sich jeweils zwischen den beiden fluchtenden Zentrierstegen 11 der einander entsprechenden Umlenkschalen 10 bzw. 14 beider Stirnseiten des Tragkörpers 2. Er hat dieselbe Querschnittsform wie die Zentrierstege 11 und integriert diese. Zur Befestigung des Haltesteges 8 zwischen den Zentrierstegen 11 sind am Haltesteg 8 abstehende Steckzapfen 20 angebracht, welche in Ausnehmungen 21 der Zentrierstege 11 passend eingesteckt sind.

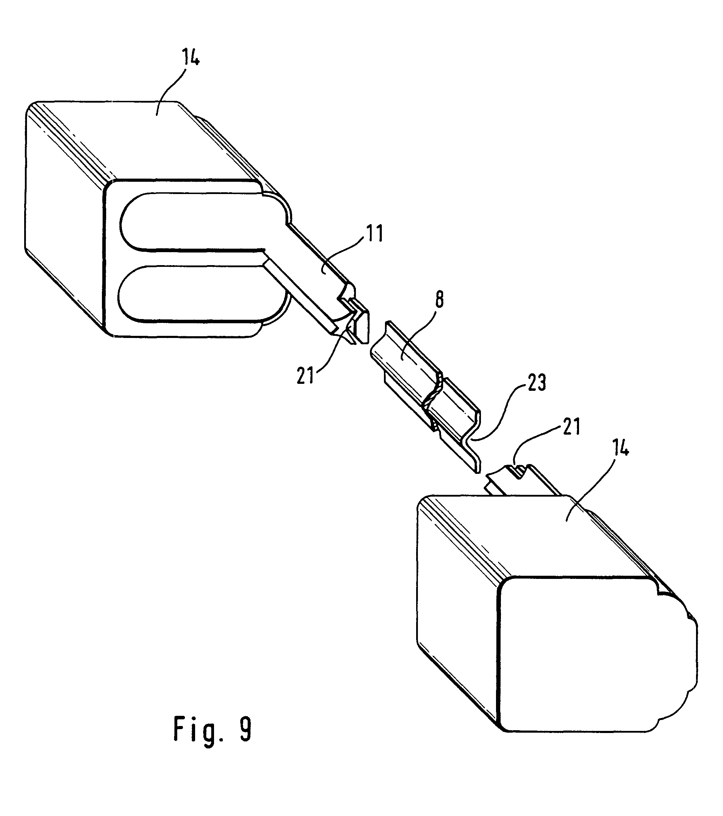

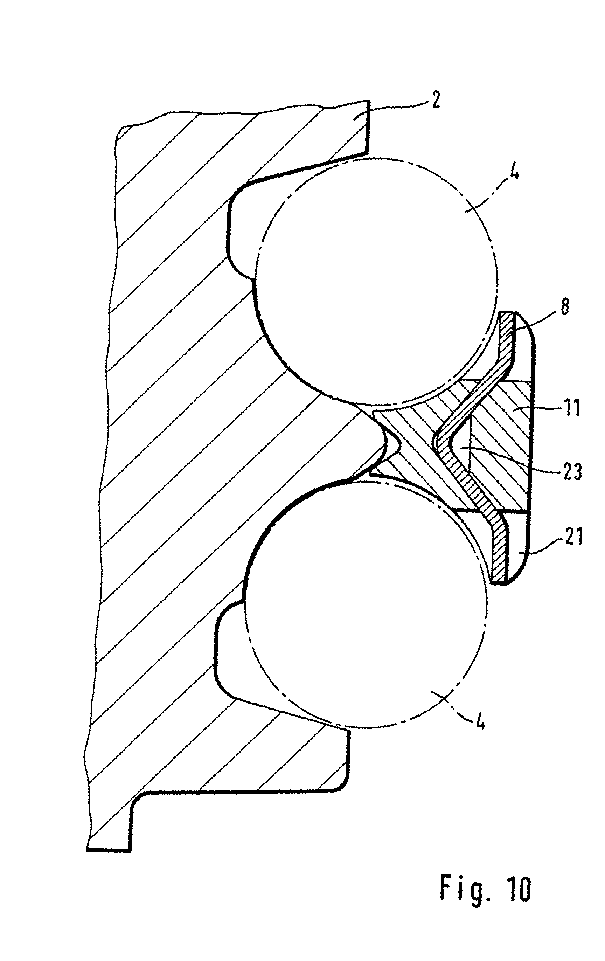

In den Figuren 9 und 10 ist der Haltesteg 8 als dünner metallischer Blechstreifen mit konstantem Querschnitt ausgebildet. Zur Erhöhung seiner Steifigkeit ist der Blechstreifen so verformt, daß er auf seiner gesamten Länge eine Sicke 23 aufweist. Diese geht von der Seite des Haltesteges 8 aus, die von dem Tragkörper 2 abgewandt ist. Zur Befestigung des Haltesteges 8 zwischen den Zentrierstegen 11 weisen die Zentrierstege hier ebenfalls Ausnehmungen 21 auf, in welchen der Haltesteg 8 mit seinen Enden passend eingesteckt ist.

### Bezugszeichen

- 1: Führungsschiene
- 2: Tragkörper
- 3: Laufbahn
- 4: Wälzkörper
- 5: Laufbahn
- 6: Rücklaufbohrung
- 7: Umlenkteil
- 8: Halteteil
- 9: Gehäuse
- 10: Umlenkschale
- 11: Zentriersteg
- 12: Zentrierbund
- 13: Senkung
- 14: äußere Umlenkschale
- 15: innere Umlenkschale
- 16: Zentrierbundhälfte
- 17: Zentrierbundhälfte
- 18: Frontabstreifer
- 19: Schmierkanaleinsatz
- 20: Steckzapfen
- 21: Ausnehmung
- 22: Profilierung
- 23: Sicke

## Patentansprüche

1. Linearwälzlager mit einer festen Führungsschiene und einem diese U-förmig umgreifenden Tragkörper, welcher sich über Wälzkörper an der Führungsschiene abstützt und längs dieser verfahrbar ist, wobei die Wälzkörper zu beiden Seiten der Führungsschiene an dem Tragkörper in paarweise angeordneten Reihen endlos umlaufend angeordnet und dort mit Haltestegen gehalten sind, sich an Laufbahnen der Führungsschiene und des Tragkörpers abwälzen, an den in Fahrtrichtung weisenden Stirnseiten des Tragkörpers umgelenkt werden und durch Rücklaufbohrungen des Tragkörpers hindurch zurücklaufen, wobei an den Stirnseiten des Tragkörpers Umlenkteile angeordnet sind, die angeformte, in den Bereich der Laufbahnen hineinragende Stege aufweisen, **dadurch gekennzeichnet, daß** jedes Umlenkteil (7) von einem Gehäuse (9) und zwei darin mit Spiel eingesetzten Umlenkschalen (10, 14, 15) gebildet ist, an welchen die in die Tragbereiche der Wälzkörper (4) hineinragenden Stege als Zentrierstege (11) ausgebildet sind, und daß jede Umlenkschale (10, 14, 15) zusätzlich einen abstehenden Zentrierbund (12, 16, 17) aufweist, der in eine Rücklaufbohrung (6) des Tragkörpers (2) hineinragt.

2. Linearwälzlager nach Anspruch 1, **dadurch gekennzeichnet, daß** die Umlenkschale jeweils geteilt ausgeführt ist, wobei ein als äußere Umlenkschale (14) bezeichneter Teil den Zentriersteg (11) und eine Zentrierbundhälfte (16) aufweist, während an einem als innere Umlenkschale (15) bezeichneten Teil die andere Zentrierbundhälfte (17) ausgebildet ist.

3. Linearwälzlager nach Anspruch 2, **dadurch gekennzeichnet, daß** die innere Umlenkschale (15) im Umlenkbereich eine Profilierung (22) aufweist, die komplementär zur äußeren Umlenkschale (14) ausgebildet ist.

4. Linearwälzlager nach Anspruch 1, **dadurch gekennzeichnet, daß** der Haltesteg; (8) jeweils zwischen zwei einander zugewandten fluchtenden Zentrierstegen (11) der beiden Umlenkteile (7) angeordnet und in deren stirnseitigen Ausnehmungen (21) mit Steckzapfen (20) passend eingesteckt ist.

5. Linearwälzlager nach Anspruch 1, **dadurch gekennzeichnet, daß** die Zentrierstege (11) jeweils in den von den Laufbahnen (5) gebildeten Tragbereich hineinragen.

6. Linearwälzlager nach Anspruch 2, **dadurch gekennzeichnet, daß** die beiden Zentrierbundhälften (16, 17) im montierten Zustand der inneren Umlenkschale (15) und der äußeren Umlenkschale (14) im Zusammenspiel mit der jeweils an den Rücklaufbohrungen (6) des Tragkörpers (2) ausgebildeten Senkung (13) ein geringes Spiel aufweisen, so daß der mögliche Versatz der übereinander angeordneten Rücklaufbohrungen (6) während des Laufes der Wälzkörper (4) durch geringe Kippbewegungen der Umlenkschale um eine zwischen den Laufbahnen (5) des Tragkörpers (2) angeordnete Zentriernase ausgeglichen wird.

7. Linearwälzlager nach Anspruch 4, **dadurch gekennzeichnet, daß** der Haltesteg (8) jeweils als dünner metallischer Blechstreifen ausgebildet ist.

8. Linearwälzlager nach Anspruch 7, **dadurch gekennzeichnet, daß** der Haltesteg (8) auf seiner gesamten Steglänge einen konstanten Querschnitt aufweist.

9. Linearwälzlager nach Anspruch 7, **dadurch gekennzeichnet, daß** in den Haltesteg (8) eine in Längsrichtung sich erstreckende Sicke (23) eingearbeitet ist.

## Claims

1. Linear rolling bearing with a fixed guide rail and a carrier body engaging around this in the form of a U, which carrier body is supported on the guide rail by rolling elements and can travel along the guide rail, the rolling elements being arranged in pairs of endlessly circulating rows on the carrier body on both sides of the guide rail while being retained there by retaining webs, which rolling elements are in rolling contact with raceways of the guide rail and the carrier body, are deflected at the ends of the carrier body oriented in travelling direction and return through return bores of the carrier body, deflectors comprising integrally formed webs that extend into the region of the raceways being arranged on the ends of the carrier body, **characterised in that** each deflector (7) is comprised of a housing (9) and two deflecting shells (10, 14, 15) inserted therein with clearance, on which shells the webs which extend into the load-bearing regions of the rolling elements (4) are configured as centering webs (11), and each deflecting shell (10, 14, 15) additionally comprises a protruding centering collar (12, 16, 17) which extends into a return bore (6) of the carrier body (2).

2. Linear rolling bearing according to Claim 1, **characterised in that** the deflecting shells are made as divided structures in which a part designated as an outer deflecting shell (14) comprises the centering web (11) and one half (16) of the centering collar, while the other half (17) of the centering collar is formed on a part designated as an inner deflecting shell (15).

3. Linear rolling bearing according to Claim 2, **characterised in that,** in the region of deflection, the inner deflecting shell (15) comprises a profile (22) which is complementary in shape to the outer deflecting shell (14).

4. Linear rolling bearing according to Claim 1, **characterised in that** each retaining web (8) is arranged between two opposing, aligned centering webs (11) of the two deflectors (7) and is fitted into their end recesses (21) by plug-in pegs (20).

5. Linear rolling bearing according to Claim 1, **characterised in that** the centering webs (11) extend into the load-bearing regions formed by the raceways (5).

6. Linear rolling bearing according to Claim 2, **characterised in that,** in the mounted state of the inner deflecting shell (15) and the outer deflecting shell (14), the two halves (16, 17) of the centering collar have a slight play relative to the respective counterbores (13) configured on the return bores (6) of the carrier body (2) so that the possible offset between the superposed return bores (6) during the circulation of the rolling elements (4) is compensated by slight tilting movements of the deflecting shell about a centering lug arranged between the raceways (5) of the carrier body (2).

7. Linear rolling bearing according to Claim 4, **characterised in that** the retaining webs (8) are made in the form of thin sheet metal strips.

8. Linear rolling bearing according to Claim 7, **characterised in that** the retaining webs (8) have a constant cross-section over their entire web length.

9. Linear rolling bearing according to Claim 7, **characterised in that** a bead (23) extending in longitudinal direction is worked into the retaining webs (8).

## Revendications

1. Palier linéaire à roulement ayant un rail fixe de guidage et un corps de support qui entoure celui-ci en forme de U et qui est supporté sur le rail de guidage par des corps roulants en étant adapté à être déplacé le long de celui-ci, les corps roulants étant agencés des deux côtés du rail de guidage sur le corps de support dans des paires de rangées pour circulation sans fin, lesquels corps roulants y sont retenus par des entretoises de retenue, ils roulent sur des pistes de roulement du rail de guidage et du corps de support et sont renvoyés aux côtés frontaux du corps de support orientés selon la direction d'avancement et retournent par des alésages de retour du corps de support, et des pièces de renvoi qui sont agencées sur les côtés frontaux du corps de support comprennent des entretoises solidaires qui s'étendent dans la région des pistes de roulement, **caractérisé en ce que** chaque pièce de renvoi (7) est formée par un boîtier (9) et deux coques de renvoi (10, 14, 15) insérées dedans avec jeu, les entretoises qui s'étendent dans les régions de support des corps roulants (4) sont configurées en forme d'entretoises de centrage (11), et chaque coque de renvoi (10, 14, 15) comprend, de plus, un collet de centrage (12, 16, 17) en saillie qui s'étend dans un alésage de retour (6) du corps de support (2).

2. Palier linéaire à roulement selon la revendication 1, **caractérisé en ce que** chaque coque de renvoi a une structure divisée dont une partie, qu'on appelle coque extérieure de renvoi (14), comprend l'entretoise de centrage (11) ainsi qu'une moitié (16) du collet de centrage pendant que l'autre moitié (17) du collet de centrage est configurée sur une partie qu'on appelle coque intérieure de renvoi (15).

3. Palier linéaire à roulement selon la revendication 2, **caractérisé en ce que,** dans la zone de renvoi, la coque intérieure de renvoi (15) est munie d'un profilage (22) qui est de forme complémentaire à la coque extérieure de renvoi (14).

4. Palier linéaire à roulement selon la revendication 1, **caractérisé en ce que** chaque entretoise de retenue (8) est disposée entre deux entretoises de centrage (11) des deux pièces de renvoi (7), faisant face et alignées l'une à l'autre, et elle est enfichée de manière ajustée dans des évidements (21) frontaux des pièces de renvoi (7) par des goupilles (20) enfichables.

5. Palier linéaire à roulement selon la revendication 1, **caractérisé en ce que** les entretoises de centrage (11) s'étendent dans la zone portante formée par les pistes de roulement (5).

6. Palier linéaire à roulement selon la revendication 2, **caractérisé en ce que,** à l'état assemblé de la coque intérieure de renvoi (15) et de la coque extérieure de renvoi (14), les deux moitiés (16, 17) du collet de centrage présentent par rapport à la contre-dépouille (13) qui est prévue sur les alésages de retour (6) du corps de support (2), un faible jeu, de sorte qu'un décalage éventuel des alésages superposés de retour (6) pendant la circulation des corps roulants (4) est compensé par des basculements faibles de la coque de renvoi autour d'un talon de centrage agencé entre les pistes de roulement (5) du corps de support (2).

7. Palier linéaire à roulement selon la revendication 4, **caractérisé en ce que** l'entretoise de retenue (8) est configurée sous la forme d'un ruban mince en tôle métallique.

8. Palier linéaire à roulement selon la revendication 7, **caractérisé en ce que** l'entretoise de retenue (8) possède sur toute sa longueur, une section droite constante.

9. Palier linéaire à roulement selon la revendication 7, **caractérisé en ce qu'**une moulure (23) s'étendant selon la direction longitudinale est travaillée dans l'entretoise de retenue (8).
